# EUROPEAN PATENT APPLICATION

(11) **EP 2 716 875 A2**
(43) Date of publication of application: **09.04.2014**
(21) Application number: 13185670.0
(22) Date of filing: 24.09.2013
(51) Int. Cl.: F01D 11/00

(54) **Spline seal with cooling pathways**

(30) Priority: 03.10.2012 US 201213633891
(71) Applicant: General Electric Company, Schenectady, New York 12345 (US)
(72) Inventor: Morgan, Victor John, Greenville, SC South Carolina 29615 (US); Weber, David Wayne, Greenville, SC South Carolina 29615 (US)
(74) Representative: Cleary, Fidelma

(57) **Abstract**

The present application provide a seal 90 for use between components 91, 92 facing a high pressure cooling air flow 97 and a hot gas path 98 in a gas turbine engine. The seal 90 may include a first shim 93, a second shim 94 with an air exit hole, one or more middle layers 95, 96 positioned between the first shim 93 and the second shim 94, and one or more cooling pathways extending through the middle layers for the high pressure cooling air flow 97 to pass therethrough and exit via the air exit hole into the hot gas path 98.

Corresponding method for cooling a seal 90.

## Description

The present application and resultant patent relate generally to gas turbine engines and more particularly relate to spline seals and the like having passive cooling pathways extending therethrough.

Generally described, turbo-machinery such as gas turbine engines and the like include a main gas flow path extending therethrough. Gas leakage, either out of the gas flow path or into the gas flow path, may lower overall gas turbine efficiency, increase fuel costs, and possibly increase emission levels. Secondary flows also may be used within the gas turbine engine to cool the various heated components. Specifically, cooling air may be extracted from the later stages of the compressor for use in cooling the heated components and for purging gaps and cavities between adjacent components. For example, spline seals may be placed between turbine components such as stators and the like to limit air leakage. These locations, however, may face very high temperatures and velocities that may lead to heavy oxidation and even seal failure. This potential damage may be mitigated somewhat by providing purge air to the gap with the spline seal therein. This purge air, however, may be a largely inefficient use of the cooling air.

There is thus a desire for an improved spline seal for use between stator components and other components in a heavy duty gas turbine engine. Such a spline seal may be cooled with less flow than is generally necessary to purge the gap therein for overall higher efficiency and with increased component lifetime.

The present application and the resultant patent thus provide a seal for use between components facing a high pressure cooling air flow and a hot gas path in a gas turbine engine. The seal may include a first shim, a second shim with an air exit hole, one or more middle layers positioned between the first shim and the second shim, and one or more cooling pathways extending through the middle layers for the high pressure cooling air flow to pass therethrough and may exit via the air exit hole into the hot gas path.

The present application and the resultant patent further provide a method of cooling a seal positioned between components in a gas turbine engine. The method may include the steps of flowing high pressure cooling air about a first side of the seal, drawing the high pressure cooling air through one or more cooling pathways in one or middle layers of the seal, and drawing the high pressure cooling air through one or more air exit holes about a second side of the seal into a hot gas path.

The present application and the resultant patent further provide a spline seal for use between components facing a high pressure cooling air flow and a hot gas path in a gas turbine engine. The spline seal may include a first metallic shim, a second metallic shim with one or more air exit holes, a number of porous material layers positioned between the first shim and the second shim, and one or more cooling pathways extending through the porous material layers for the high pressure cooling air flow to pass therethrough and exit via the air exit hole into the hot gas path.

These and other features and improvements of the present application and the resultant patent will become apparent to one of ordinary skill in the art upon review of the following detailed description when taken in conjunction with the several drawings and the appended claims.
Fig. 1 is a schematic view of a gas turbine engine showing a compressor, combustor, and a turbine.
Fig. 2 is a partial side view of a turbine showing a number of components positioned along a hot gas path.
Fig. 3 is a side cross-sectional view of a spline seal positioned between adjacent turbine components.
Fig. 4 is a partially transparent view of a spline seal as may be described herein.
Fig. 5 is an end plan view of an alternative embodiment of a spline seal as may be described herein.
Fig. 6 is an end plan view of an alternative embodiment of a spline seal as may be described herein.
Fig. 7 is a partially transparent view of an alternative embodiment of a spline seal as may be described herein.
Fig. 8 is a partially transparent view of an alternative embodiment of a spline seal as may be described herein.
Fig. 9 is a partially transparent view of an alternative embodiment of a spline seal as may be described herein.

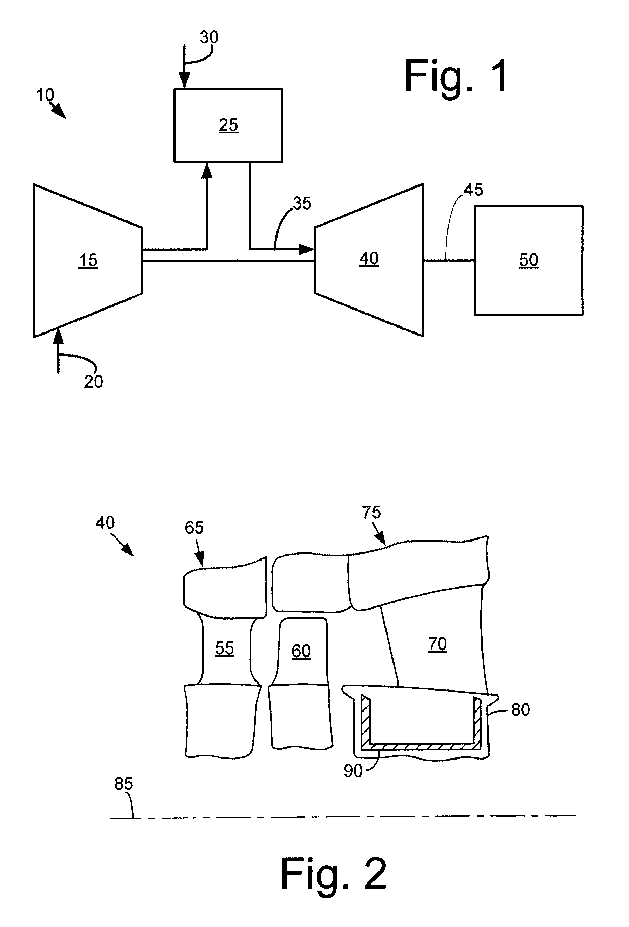

Referring now to the drawings, in which like numerals refer to like elements throughout the several views, Fig. 1 shows a schematic view of gas turbine engine 10 as may be used herein. The gas turbine engine 10 may include a compressor 15. The compressor 15 compresses an incoming flow of air 20. The compressor 15 delivers the compressed flow of air 20 to a combustor 25. The combustor 25 mixes the compressed flow of air 20 with a pressurized flow of fuel 30 and ignites the mixture to create a flow of combustion gases 35. Although only a single combustor 25 is shown, the gas turbine engine 10 may include any number of combustors 25. The flow of combustion gases 35 is in turn delivered to a turbine 40. The flow of combustion gases 35 drives the turbine 40 so as to produce mechanical work. The mechanical work produced in the turbine 40 drives the compressor 15 via a shaft 45 and an external load 50 such as an electrical generator and the like.

The gas turbine engine 10 may use natural gas, various types of syngas, and/or other types of fuels. The gas turbine engine 10 may be any one of a number of different gas turbine engines offered by General Electric Company of Schenectady, New York, including, but not limited to, those such as a 7 or a 9 series heavy duty gas turbine engine and the like. The gas turbine engine 10 may have different configurations and may use other types of components. Other types of gas turbine engines also may be used herein. Multiple gas turbine engines, other types of turbines, and other types of power generation equipment also may be used herein together.

Fig. 2 shows a portion of the turbine 40. Generally described, the turbine 40 may include a first stage nozzle 55 and a first stage bucket 60 of a first stage 65. Also shown is a second stage nozzle 70 of a second stage 75. Any number of stages may be used herein. The nozzles 55, 70 may be positioned on a diaphragm 80. Any number of nozzles 70 and diaphragms 80 may be positioned circumferentially about an axis 85. A spline seal 90 may be positioned between each pair of adjacent diaphragms 80. The spline seals 90 may be used between adjacent diaphragms 80 or other turbine components so as to prevent the leakage of the cooling air flows 20 from the compressor 15 or elsewhere therethrough. As described above, the spline seals 90 may have many different configurations. Other types of sealing mechanisms also may be used. Other components and other configurations may be used herein.

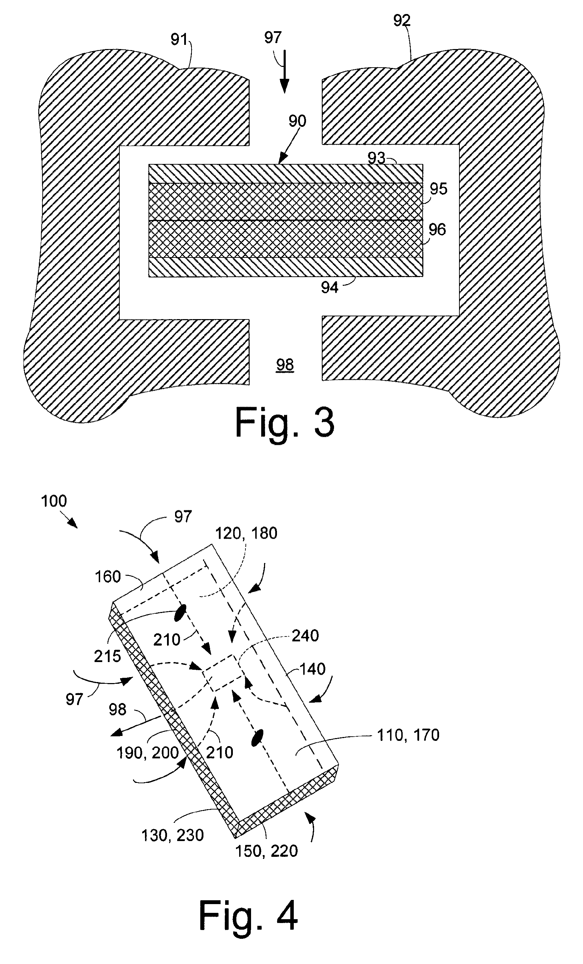

Fig. 3 shows use of the seal 90 between adjacent turbine components, a first component 91 and a second component 92. The seal 90 may have a first metallic shim 93 and a second metallic shim 94. A number of layers of a porous maternal may be positioned therebetween. Although a first inner layer 95 and a second inner layer 96 are shown, any number of the inner layers may be used. Any number of the seals 90 may be used herein. The seals 90 prevent leakage of a flow of high pressure cooling air 97 into the lower pressure hot gas path 98.

Fig. 4 shows an example of a spline seal 100 as may be described herein. The spline seal 100 may have a top 110, a bottom 120, a first side 130, an opposed second side 140, a first end 150, and an opposed second end 160. (The terms "bottom," "top," "side," "end," "first," "second" and the like are used for purposes of relative orientation only and not as an absolute position.) The top 110 may include a first metal shim 170 and the bottom 120 may include a second metal shim 180. The metal shims 170, 180 may be made out of a high temperature resistant material such as stainless steel, nickel-based alloys, and the like. Other types of materials also may be used herein. The metal shims 170, 180 may have any size, shape, or configuration. Additional metal shim layers also may be used. Other types of seals may be used herein.

The spline seal 100 also may have one or more porous material layers 190 positioned between the metal shims 170, 180. The porous material layers 190 may be a flexible cloth material 200 and the like. For example, the flexible cloth material 200 may be a woven wire mesh or any type of flexible high temperature resistant material. The porous material layers 190 may have any size, shape, or configuration and may have various levels of porosity. The porous nature of these layers 190 provides any number of cooling pathways 210 extending therethrough. The metal shims 170 and the porous material layers 190 may be coupled via a number of welds 215. High temperature adhesives, high strength fasteners, and other types of conventional fastening means also may be used herein.

The first end 150 and/or the second end 160 of the spline seal 100 may be an open end 220. Likewise, the first side 130 and/or the second side 140 may be an opened side 230. The open ends 220 and the open sides 230 thus are in communication with the high pressure flow of cooling air 97. The second metal shim 180 may have one or more air exit holes 240 formed therethrough. Any number of the air exit holes 240 may be used herein. The air exit holes 240 may have any size, shape, or configuration. The air exit holes 240 thus face the low pressure hot gas path 98. Other components and other configurations may be used herein.

The pressure differential between the high pressure cooling air 97 and the lower pressure gas path 98 thus draws the high pressure cooling air 97 into the open ends 220 and the open sides 230 of the spline seal 100. The high pressure cooling air 97 travels through the cooling pathways 210 in the porous material layers 190 thus cooling the spline seal 100. The high pressure cooling air 97 then may exit via the air exit holes 240 into the low pressure gas path 98. The high pressure cooling air 97 thus cools the seal 100 as it travels from the open ends 220 and the open sides 230 to the air exit holes 240 through the cooling pathways 210.

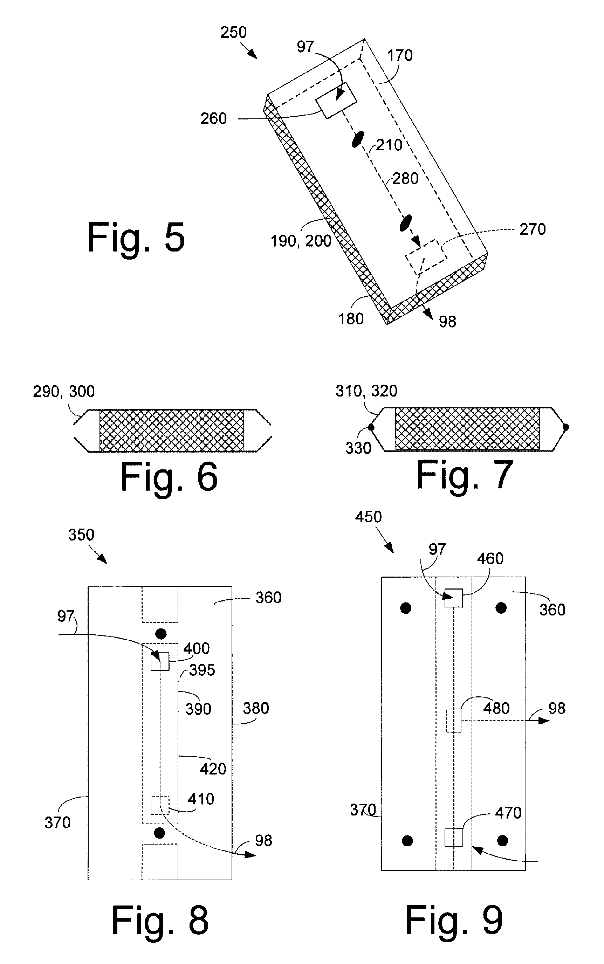

Fig. 5 shows a further example of a spline seal 250 as may be described herein. The spline seal 250 may be largely similar to the spline seal 100 described above, but with the first metal shim 170 including an air entrance hole 260 and the second metal shim 180 including an offset air exit hole 270. The air entrance hole 260 and the air exit hole 270 may have any size, shape, or configuration. The air exit hole 270 may include an offset position 280 from the air entrance hole 260 along the length of the shims 170. Alternatively, the holes 260, 270 may be aligned. The high pressure cooling air 97 thus may enter the air entrance hole 260 along the first shim 170, travel through the cooling pathways 210 along the length of the offset position 280 and then exit the air exit hole 270 into the low pressure gas pathway 98. Other components and other configurations may be used herein.

The spline seal 250 may include the open ends 220 and/or the open sides 230. Alternatively, as is shown in Fig. 6, the ends 150, 160 may be partially enclosed ends 290. The partially enclosed ends 290 may include one or more bent ends 300 of the metal shims 170, 180. The ends 150, 160 also may be enclosed ends 310 as is shown in Fig. 7. The enclosed ends 310 may include one or more bent ends 320 of the metal shims 170, 180 and enclosed by a weld 330. Other types of fastening means may be used herein. Other components and other configurations may be used herein.

Fig. 8 shows an alternative example of a spline seal 350 as may be described herein. Similar to that described above, the spline seal 350 may include a first metal shim 360, a second metal shim 370, and a number of middle layers 380. The middle layers 380 may be similar to the porous material layers 190 and the flexible cloth material 200 described above. Alternatively, any type of high temperature resistant materials may be used herein. The middle layers 380 may be metallic and/or non-metallic. The middle layers 380 may include one or more cooling pathways 390 defined therein. Depending upon the nature of the middle layers 380, the cooling pathways 390 may be more in the form of voids 395 extending therethrough. The cooling pathways 390 may have any size, shape, or configuration. The cooling pathways 390 may extend from one or more air entrance holes 400 to one or more air exit holes 410. The air entrance holes 400 and the air exit holes 410 may include an offset position 420 along the length of the seal 350. The high pressure cooling air 97 thus may enter the air entrance hole 400, extend along the cooling pathways 390 within the middle layers 380, and exit via the exit hole 410 into the low pressure hot gas path 98. Other components and other configurations may be used herein.

Fig. 9 shows a further embodiment of a spline seal 450 as may be used herein. The spline seal 450 may be similar to the spline seal 350 but with a first air entrance hole 460 and a second air entrance hole 470 as shown. The high pressure cooling air 97 thus may enter the air entrance holes 460, travel through the cooling pathways 390, and again exit via a center air exit hole 480. Any number of air entrance holes and air exit holes may be used herein in any size, shape, or position. Other components and other configurations may be used herein.

The spline seals described herein thus use the pressure differential between the high pressure cooling air 97 and the lower pressure hot gas path 98 to promote the cooling of the seal via the cooling pathways therein. The spline seals described herein thus are adequately cooled with less flow than is typically required for purge air cooling. Moreover, the spline seals described herein provide increased seal lifetime, reduced secondary flows, high overall engine efficiency, and a reduced heat rate. The spline seal may be original equipment or part of a retrofit. Different configurations of the spline seals may be used together herein. Other types of sealing locations also may be used.

It should be apparent that the foregoing relates only to certain embodiments of the present application and the resultant patent. Numerous changes and modifications may be made herein by one of ordinary skill in the art without departing from the general spirit and scope of the invention as defined by the following claims and the equivalents thereof.

Various aspects and embodiments of the present invention are defined by the following numbered clauses:
1. A seal for use between components facing a high pressure cooling air flow and a hot gas path in a gas turbine engine, comprising:
   a first shim;
   a second shim;
   the second shim comprising an air exit hole;
   one or more middle layers positioned between the first shim and the second shim; and
   one or more cooling pathways extending through the one or more middle layers for the high pressure cooling air flow to pass therethrough and exit via the air exit hole into the hot gas path.
2. The seal of clause 1, wherein the first shim and the second shim comprise metallic shims.
3. The seal of any preceding clause, wherein the one or more middle layers comprise one or more porous material layers with the one or more cooling pathways extending therethrough.
4. The seal of any preceding clause, wherein the one or more porous material layers comprise a flexible cloth material.
5. The seal of any preceding clause, wherein the one or more middle layers comprise one or more open sides with the one or more cooling pathways extending therethrough.
6. The seal of any preceding clause, wherein the one or more middle layers comprise one or more open ends with the one or more cooling pathways extending therethrough.
7. The seal of any preceding clause, wherein the one or more middle layers comprise one or more partially open ends with the one or more cooling pathways extending therethrough.
8. The seal of any preceding clause, wherein the one or more middle layers comprise one or more closed ends.
9. The seal of any preceding clause, wherein the first shim comprises an air entrance hole.
10. The seal of any preceding clause, wherein the air entrance hole and the air exit hole comprise an offset position.
11. The seal of any preceding clause, wherein the first shim comprises a plurality of air entrance holes.
12. The seal of any preceding clause, wherein the second shim comprises a plurality of air exit holes.
13. The seal of any preceding clause, wherein the air exit hole comprises a center air exit hole.
14. The seal of any preceding clause, wherein the components comprise a first stator and a second stator.
15. A method of cooling a seal positioned between components in a gas turbine engine, comprising:
   flowing high pressure cooling air about a first side of the seal;
   drawing the high pressure cooling air through one or more cooling pathways in one or middle layers of the seal; and
   drawing the high pressure cooling air through one or more air exit holes about a second side of the seal into a hot gas path.
16. A spline seal for use between components facing a high pressure cooling air flow and a hot gas path in a gas turbine engine, comprising:
   a first metallic shim;
   a second metallic shim;
   the second metallic shim comprising one or more air exit holes;
   a plurality of porous material layers positioned between the first shim and the second shim; and
   one or more cooling pathways extending through the plurality of porous material layers for the high pressure cooling air flow to pass therethrough and exit via the air exit hole into the hot gas path.
17. The spline seal of any preceding clause, wherein the plurality of porous material layers comprise a flexible cloth material.
18. The spline seal of any preceding clause, wherein the plurality of porous material layers comprise one or more open sides and/or one or more open ends with the one or more cooling pathways extending therethrough.
19. The spline seal of any preceding clause, wherein the first shim comprises one or more air entrance holes.
20. The spline seal of any preceding clause, wherein the one or more air entrance holes and the one or more air exit holes comprise an offset position.

## Claims

1. A seal (90) for use between components (91, 92) facing a high pressure cooling air flow (97) and a hot gas path (98) in a gas turbine engine (10), comprising:
a first shim (93);
a second shim (94);
the second shim (94) comprising an air exit hole (240);
one or more middle layers (95, 96) positioned between the first shim (93) and the second shim (94); and
one or more cooling pathways (210) extending through the one or more middle layers (95, 96) for the high pressure cooling air flow (97) to pass therethrough and exit via the air exit hole (240) into the hot gas path (98).

2. The seal of claim 1, wherein the first shim and the second shim comprise metallic shims (170, 180).

3. The seal of claim 1 or claim 2, wherein the one or more middle layers (95, 96) comprise one or more porous material layers (190) with the one or more cooling pathways (210) extending therethrough.

4. The seal of claim 3, wherein the one or more porous material layers (190) comprise a flexible cloth material (200).

5. The seal of any preceding claim, wherein the one or more middle layers comprise;
one or more open sides (230) with the one or more cooling pathways (210) extending therethrough, and/or
one or more open ends (220) with the one or more cooling pathways (210) extending therethrough.

6. The seal of any preceding claim, wherein the one or more middle layers comprise one or more partially open ends (290) with the one or more cooling pathways (210) extending therethrough.

7. The seal of any preceding claim, wherein the one or more middle layers (95, 96) comprise one or more closed ends.

8. The seal of any preceding claim, wherein the first shim (93) comprises an air entrance hole (260; 400).

9. The seal of claim 8, wherein the air entrance hole (400) and the air exit hole (410) comprise an offset position (420).

10. The seal of any preceding claim, wherein the first shim (93) comprises a plurality of air entrance holes (400; 460, 470).

11. The seal of any preceding claim, wherein the second shim (94) comprises a plurality of air exit holes (410).

12. The seal of any preceding claim, wherein the air exit hole comprises a center air exit hole (480).

13. The seal of any preceding claim, wherein the components comprise a first stator and a second stator.

14. The seal of any preceding claim, comprising a spline seal (100) for use between components facing a high pressure cooling air flow and a hot gas path in a gas turbine engine (10), the spline seal comprising:
a first metallic shim (170);
a second metallic shim (180);
the second metallic shim (180) comprising one or more air exit holes (410);
a plurality of porous material layers (190) positioned between the first shim (170) and the second shim (180); and
one or more cooling pathways (210) extending through the plurality of porous material layers (190) for the high pressure cooling air flow to pass therethrough and exit via the air exit hole (410) into the hot gas path.

15. A method of cooling a seal (90) positioned between components in a gas turbine engine, comprising:
flowing high pressure cooling air (97) about a first side of the seal (90);
drawing the high pressure cooling air (97) through one or more cooling pathways (210) in one or middle layers (95, 96) of the seal (90); and
drawing the high pressure cooling air (97) through one or more air exit holes (240) about a second side of the seal (90) into a hot gas path (98).
